# DEMANDE DE BREVET EUROPEEN

(11) **EP 1 324 478 A2**
(43) Date de publication de la demande: **02.07.2003**
(21) Numéro de dépôt: 02354199.8
(22) Date de dépôt: 30.12.2002
(51) Int. Cl.: H02M 3/155

(54) **Oscillateur haute tension ayant un temps de réaction rapide**

(30) Priorité: 28.12.2001 FR 0117037
(71) Demandeur: STMicroelectronics S.A., 92120 Montrouge (FR)
(72) Inventeur: Moindron, Laurent, 37390 Notre Dame d'Oe (FR)
(74) Mandataire: de Beaumont, Michel

(57) **Abrégé**

L'invention concerne un oscillateur haute tension comprenant un premier commutateur (K1) normalement fermé en série avec un circuit résonnant (C, L), un deuxième commutateur (K2) normalement fermé en parallèle sur le circuit résonant, et un circuit de commande (3) interdisant la conduction simultanée des deux commutateurs.

## Description

La présente invention concerne la réalisation d'un circuit oscillateur haute tension, c'est-à-dire capable de fonctionner avec des tensions d'alimentation pouvant aller jusqu'à plusieurs centaines de volts.

Un exemple d'application de la présente invention concerne les systèmes d'alimentation destinés à fournir une tension continue régulée. Parmi les solutions classiques dans cette application d'alimentation, on connaît les systèmes à transformateur qui présentent l'inconvénient d'être lourds, encombrants et onéreux, et les systèmes de type convertisseur à découpage. Les alimentations à découpage ont comme inconvénients notables une dissipation engendrée par le fait que l'interrupteur à découpage est souvent à commutation dure (transistor MOS ou IGBT), et l'absence de tension fournie dès le démarrage ou branchement du circuit. Il est en effet généralement nécessaire qu'une alimentation auxiliaire d'un circuit de commande fournisse une énergie suffisante pour la commande de l'interrupteur de découpage de la tension d'alimentation.

Un exemple d'alimentation où l'on utilise un oscillateur haute tension concerne le domaine des lampes fluorescentes compactes (CFL). L'alimentation du tube fluorescent est généralement obtenue au moyen d'un demi-pont en H commandé, soit au moyen d'un transformateur, soit au moyen d'un oscillateur en circuit intégré. Dans ce dernier cas, on a alors un problème de référence de tension pour la commande du transistor de la branche supérieure du pont, ce qui impose le recours à un décaleur de niveau.

L'invention sera décrite par la suite plus particulièrement en relation avec une application à un circuit d'alimentation. On notera toutefois que celle-ci s'applique plus généralement dans tous les domaines où un oscillateur haute tension peut être requis. Par exemple, il pourra s'agir d'applications à transfert d'énergie par induction, comme les chargeurs de batterie sans fils ou les plaques chauffantes par induction.

L'invention vise à proposer un oscillateur haute tension capable de démarrer dès la mise sous tension, c'est-à-dire dès qu'il reçoit une tension d'alimentation.

L'invention vise également à faciliter le filtrage éventuel de l'entrée du circuit pour réduire les perturbations électromagnétiques.

L'invention vise également à proposer un oscillateur à faible dissipation par rapport aux systèmes à découpage connus dans les alimentations.

L'invention vise en outre à minimiser l'encombrement de l'oscillateur.

Dans son application aux circuits d'alimentation, l'invention vise en outre à résoudre les problèmes de référence de tension pour la commande des composants de commutation.

Pour atteindre ces objets et d'autres, la présente invention prévoit un oscillateur haute tension comprenant :
un premier commutateur normalement fermé en série avec un circuit résonnant ;
un deuxième commutateur normalement fermé en parallèle sur le circuit résonant ; et
un circuit de commande interdisant, dès la mise sous tension de l'oscillateur, la conduction simultanée des deux commutateurs.

Selon un mode de réalisation de la présente invention, l'oscillateur comporte un unique circuit résonnant.

Selon un mode de réalisation de la présente invention, le circuit de commande est dépourvu de circuit d'alimentation auxiliaire.

Selon un mode de réalisation de la présente invention, ledit premier commutateur est fermé pendant des périodes de recharge d'un condensateur du circuit résonnant série, et est ouvert pendant une phase de résonance.

Selon un mode de réalisation de la présente invention, la commande du premier commutateur est effectuée en comparant la tension aux bornes du circuit résonnant par rapport à un seuil prédéterminé.

Selon un mode de réalisation de la présente invention, la commande du deuxième commutateur est effectuée en retardant l'instant de fermeture de ce commutateur par rapport à la fin de conduction du premier commutateur.

Selon un mode de réalisation de la présente invention, lesdits commutateurs sont bidirectionnels en courant et en tension.

Selon un mode de réalisation de la présente invention, lesdits commutateurs sont unidirectionnels.

Selon un mode de réalisation de la présente invention, l'oscillateur comporte une diode de roue libre polarisée de façon inverse par rapport au deuxième commutateur.

Selon un mode de réalisation de la présente invention, la phase de résonance comporte un premier cycle de décharge dudit condensateur à travers le deuxième commutateur et un deuxième cycle de décharge dudit condensateur à travers ladite diode de roue libre.

Selon un mode de réalisation de la présente invention, le deuxième commutateur est constitué d'un thyristor dont l'anode est connectée côté premier commutateur.

Selon un mode de réalisation de la présente invention, le premier commutateur est constitué d'un transistor bipolaire de type NPN rendu normalement fermé par la connexion de sa base et de son collecteur au moyen d'une résistance, l'émetteur du transistor bipolaire étant relié au circuit résonant.

L'invention prévoit également un circuit d'alimentation continu comportant un oscillateur haute tension.

Selon un mode de réalisation de la présente invention, un condensateur de sortie est connecté, en parallèle avec deux diodes de redressement en série, au deuxième commutateur.

Selon un mode de réalisation de la présente invention, une première diode de redressement relie une extrémité du circuit résonant à une électrode du deuxième commutateur et à une électrode positive du condensateur de sortie, l'anode de la première diode de redressement étant reliée au circuit résonant et à la cathode d'une deuxième diode de redressement reliée à la diode de roue libre.

Selon un mode de réalisation de la présente invention, la polarité de la tension de sortie est choisie en fonction de l'électrode du condensateur de sortie à laquelle est connectée la référence de la tension d'alimentation.

Selon un mode de réalisation de la présente invention, le circuit d'alimentation comporte un circuit de commande ayant pour rôle de retarder l'instant d'amorçage du deuxième commutateur en fonction de la tension de sortie.

Ces objets, caractéristiques et avantages, ainsi que d'autres de la présente invention seront exposés en détail dans la description suivante de modes de réalisation particuliers faite à titre non-limitatif en relation avec les figures jointes parmi lesquelles :
la figure 1 représente, par une vue très schématique, un mode de réalisation d'un oscillateur haute tension selon la présente invention ;
les figures 2A, 2B, 2C et 2D illustrent, sous forme de chronogrammes, le fonctionnement d'un oscillateur haute tension selon la présente invention ;
la figure 3 représente un oscillateur haute tension selon un mode de réalisation de l'invention avec un circuit de commande illustré de façon fonctionnelle ;
la figure 4 représente un mode de réalisation d'un oscillateur haute tension et de son circuit de commande selon la présente invention ;
la figure 5 représente un circuit d'alimentation exploitant un oscillateur alimenté par une tension alternative haute tension selon la présente invention ; et
la figure 6 illustre, sous forme de chronogramme, le fonctionnement d'un oscillateur selon la présente invention.

Les mêmes éléments ont été désignés par les mêmes références aux différentes figures. Pour des raisons de clarté, seuls les éléments qui sont nécessaires à la compréhension de l'invention ont été représentés aux figures et seront décrits par la suite. En particulier, les circuits de fourniture de la tension d'alimentation d'un oscillateur haute tension selon l'invention n'ont pas été détaillés et ne font pas l'objet de l'invention. De même, les circuits avals exploitant le signal oscillant de l'invention et notamment les circuits qu'il alimente ne font pas l'objet de l'invention.

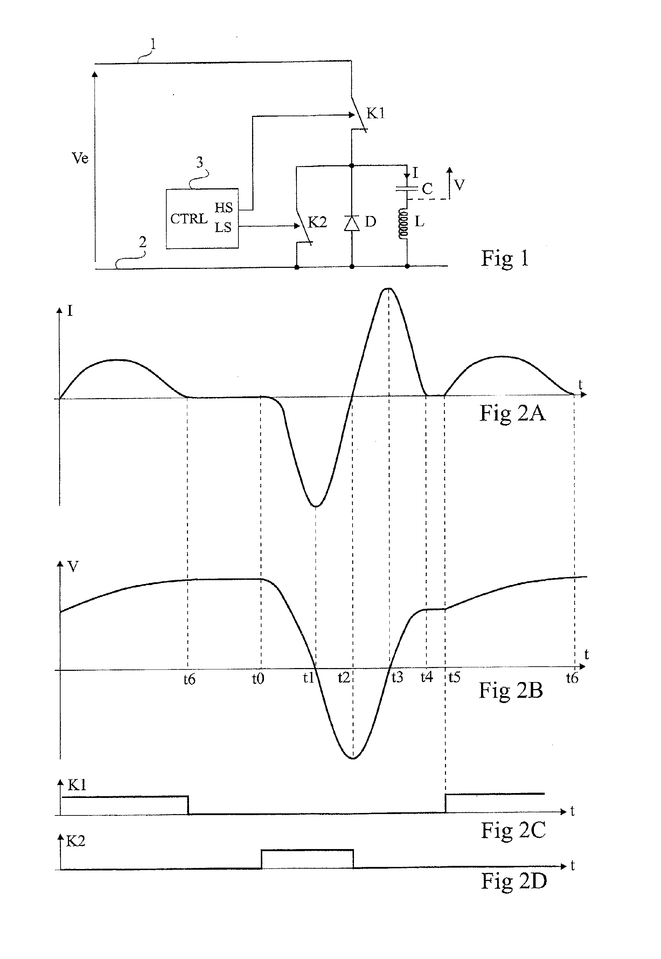

La figure 1 représente, de façon très schématique, un mode de réalisation d'un oscillateur selon la présente invention.

Un premier commutateur K1 est en série avec un condensateur C et une inductance L entre deux bornes 1 et 2 d'application d'une tension d'alimentation ou d'entrée Ve. Une diode D est connectée en parallèle avec le circuit résonnant CL. Un deuxième commutateur K2 est également en parallèle sur le circuit résonnant C-L, donc en parallèle avec la diode D, l'anode de la diode D étant connectée à la borne 2.

Une caractéristique de l'invention est d'utiliser des interrupteurs K1 et K2 de type normalement fermé. Une autre caractéristique de l'invention est de partager un même circuit résonnant série (inductance L et condensateur C) pour toutes les phases de fonctionnement du circuit.

Les commutateurs K1 et K2 sont commandés par un circuit 3 fournissant deux signaux distincts HS et LS pour les commutateurs respectifs K1 et K2.

Selon un premier mode de réalisation, les interrupteurs K1 et K2 sont bidirectionnels en tension et en courant, c'est-à-dire capables de tenir une tension élevée à l'état ouvert quelle que soit sa polarité et de conduire dans les deux sens à l'état fermé. Dans ce cas, la diode D est omise. Si la tension d'entrée est alternative, le circuit fonctionne alors pendant toutes les alternances.

Selon un deuxième mode de réalisation, les interrupteurs K1 et K2 sont des interrupteurs unidirectionnels, (au moins fonctionnellement au moyen du circuit de commande 3). Par conséquent, si la tension d'entrée Ve est une tension alternative (par exemple, la tension du secteur d'alimentation électrique) l'oscillateur ne fonctionne que pendant les alternances positives (ou négatives) de l'alimentation alternative.

D'autres configurations sont envisageables, pourvu de respecter le recours à des interrupteurs normalement fermés et une absence de conduction simultanée des interrupteurs K1 et K2. Par exemple, l'interrupteur K2 pourra être bidirectionnel en courant et unidirectionnel en tension (cas d'un transistor MOS). Dans ce cas, la diode D est court-circuitée par la fermeture de l'interrupteur K2.

Selon l'invention, le circuit 3 est conformé de façon à empêcher, dès la mise sous tension de l'oscillateur, une conduction simultanée des interrupteurs K1 et K2 qui aurait pour résultat de court-circuiter l'alimentation. L'interrupteur K1 sert essentiellement à provoquer la recharge du condensateur C du circuit résonnant à partir de la tension Ve tandis que l'interrupteur K2 permet d'utiliser le circuit résonnant pour décharger le condensateur C, à l'aide de la diode de roue libre D si le commutateur K2 est unidirectionnel.

Les figures 2A à 2D illustrent, par des chronogrammes, le fonctionnement d'un oscillateur haute tension selon l'invention. La figure 2A représente un exemple d'allure du courant I dans le circuit résonnant. La figure 2B illustre l'allure de la tension V aux bornes du condensateur C. La figure 2C illustre les périodes de fermeture de l'interrupteur K1. La figure 2D illustre des périodes de fermeture de l'interrupteur K2.

Le fonctionnement d'un oscillateur haute tension selon l'invention peut se décomposer en deux phases successives correspondant respectivement à la décharge et à la recharge du condensateur C. On prendra pour exemple le mode de réalisation de la figure 1, mais ce fonctionnement se transpose au cas où les commutateurs sont bidirectionnels.

On suppose le condensateur C initialement chargé et un amorçage (fermeture) de l'interrupteur K2 à un instant t0. Ce fonctionnement suppose que l'interrupteur K1 a précédemment été ouvert sous l'action du circuit de commande 3. En raison des polarités exposées précédemment, le condensateur C est, à l'instant t0 chargé positivement (figure 2B). La diode D est donc bloquée. La décharge du condensateur C intervient à travers l'interrupteur K2.

Lorsque le condensateur s'est intégralement déchargé (instant t1), le courant I est alors maximum dans l'inductance L (maximum négatif avec les conventions prises sur les figures). L'inductance se comporte alors en générateur de courant et recharge le condensateur C en négatif avec les conventions des figures.

Lorsque le courant I s'annule (instant t2), on ouvre l'interrupteur K2. Le condensateur C se décharge alors à travers l'inductance L et la diode D.

Lorsque la tension aux bornes du condensateur C s'annule (instant t3), le courant I dans l'inductance L est maximum (maximum positif avec les conventions des figures). L'inductance L se comporte alors à nouveau en générateur de courant et recharge le condensateur C en positif.

Le mécanisme de résonance exposé ci-dessus commence donc par un cycle de conduction de l'interrupteur K2 et se termine avec un cycle de conduction de la diode D. On notera que la diode D pourra être constituée d'un autre interrupteur synchronisé, être combinée à l'interrupteur K2 (diode parasite) si ce dernier est suffisamment rapide, ou être remplacée par la conduction de l'interrupteur K2 si ce dernier est bidirectionnel en courant.

Pendant la période de conduction de la diode D (instants t2 à t4), le circuit de commande 3 doit forcer l'ouverture du commutateur K2, le commutateur K1 restant ouvert pour toute la phase de résonance.

Une deuxième phase de fonctionnement de l'oscillateur de l'invention est constituée par la recharge du condensateur C à partir de la tension d'alimentation Ve. En effet, une partie de l'énergie initialement stockée dans le condensateur C a été dissipée durant la phase de résonance précédente ou consommée par la charge (non représentée). Le niveau de tension V est donc, à l'instant t4, inférieur au niveau de l'instant t0. Le but de la deuxième phase de fonctionnement est de recharger le condensateur C à son niveau initial.

Pour cela, l'interrupteur K1 étant un interrupteur normalement fermé, il devient naturellement conducteur dès que son ouverture n'est plus forcée par le circuit de commande (instant t5). Le condensateur C est donc rechargé à travers l'inductance L en série. Le courant prélevé sur la source de tension d'alimentation correspond ici à une demi-alternance sinusoïdale (instant t5 à t6). De préférence, l'interrupteur K1 est choisi pour que son ouverture survienne naturellement lorsque le courant qui le traverse s'annule afin d'éviter les surtensions liées à cette ouverture. Dans ce cas, la commande de l'interrupteur K1 se trouve particulièrement simplifiée ainsi que le filtrage contre les perturbations électromagnétiques engendrées par le découpage du courant prélevé sur l'alimentation.

Pendant la deuxième phase de fonctionnement, le circuit de commande 3 force l'ouverture du commutateur K2 afin d'éviter que les deux commutateurs K1 et K2 ne conduisent simultanément.

Les intervalles entre les instants t6 et t0 et t4 et t5 peuvent le cas échéant être supprimés. Cela dépend non seulement du circuit de commande mais également de l'énergie consommée par le circuit alimenté.

De la description qui précède, il ressort déjà qu'un oscillateur haute tension selon l'invention présente plusieurs avantages.

Un premier avantage est que l'ouverture du commutateur K2 s'effectue alors qu'aucun courant ne le traverse (instant t2). Il s'agit donc d'une commutation au zéro de courant, ce qui conduit à un filtrage plus facile si nécessaire.

Un autre avantage est que l'oscillateur peut fonctionner aussi bien qu'avec une tension d'entrée alternative qu'avec une tension d'entrée continue.

Un autre avantage est qu'un seul circuit résonnant (donc, un seul élément inductif) suffit pour les deux phases de résonance liées à la recharge du circuit oscillant.

Un avantage qu'il y a à utiliser des commutateurs normalement fermés est que cela réduit les pertes de commutation. Un autre avantage est que cela réduit également les courants de commande nécessaires, et ne nécessite pas d'alimentation auxiliaire pour démarrer le circuit.

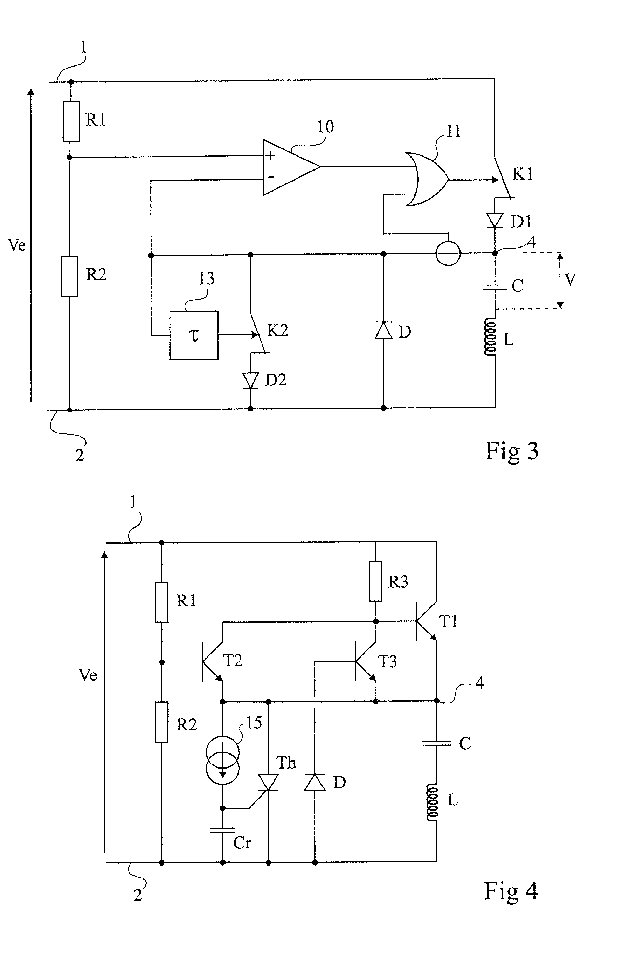

La figure 3 représente un oscillateur selon l'invention où le circuit de commande a été illustré de façon fonctionnelle. On notera que cela peut néanmoins correspondre à une réalisation pratique, même si cela ne constitue pas un mode de réalisation préféré en raison des besoins d'alimentation locale des portes logiques et amplificateurs utilisés.

En figure 3, on considère le cas de commutateurs K1 et K2 unidirectionnels. Ce caractère unidirectionnel a été symbolisé par des diodes D1 et D2 respectivement en série avec chacun de ces commutateurs, les anodes respectives des diodes D1 et D2 étant dirigées vers la borne 1 d'application de la tension d'entrée Ve supposée être la borne positive.

Selon le mode de réalisation illustré par la figure 3, on prévoit un comparateur 10 recevant, sur son entrée inverseuse (-), la tension aux bornes du circuit résonant et, sur son entrée non-inverseuse (+), une tension seuil fixée, par exemple, par un pont diviseur résistif R1-R2 connecté entre les bornes 1 et 2, le point milieu de l'association en série des résistances R1-R2 étant connecté à l'entrée non-inverseuse du comparateur 10.

Toujours selon ce mode de réalisation, on détecte la présence d'un courant dans l'interrupteur K2 ou la diode D grâce à un capteur 12 inséré dans le circuit résonant. Les deux modes de détection ci-dessus peuvent toutefois être utilisés séparément, mais la double détection apporte une sécurité supplémentaire.

Dans la représentation de la figure, la sortie du comparateur 10 est combinée par une porte de type OU 11 avec le résultat de la détection de courant. La sortie de la porte 11 empêche la conduction de l'interrupteur K1.

Pendant la recharge du condensateur C par la fermeture de l'interrupteur K1, on doit veiller à ce que l'interrupteur K2 soit ouvert. Pour cela, on peut prévoir un élément retardateur 13 décalant la mise en conduction de l'interrupteur K2 par rapport à l'instant de fermeture de l'interrupteur K1. Le retard τ du circuit 13 est choisi pour attendre la fin de conduction de l'interrupteur K1 avant d'autoriser la fermeture de l'interrupteur K2.

La figure 4 représente le schéma électrique d'un autre mode de réalisation d'un oscillateur haute tension.

Selon ce mode de réalisation, l'interrupteur K1 de type normalement fermé est constitué d'un transistor bipolaire T1 de type NPN dont la base et le collecteur sont reliés par une résistance d'amorçage R3. L'émetteur du transistor T1 est relié au noeud 4 et le collecteur du transistor T1 est relié à la borne 1.

Le commutateur K2 est ici constitué d'un thyristor Th dont l'anode est reliée au noeud 4 et dont la cathode est reliée à la borne 2.

Le comparateur 10 est constitué d'un transistor bipolaire T2 de type NPN dont la base est reliée au point milieu de l'association en série des résistances R1 et R2, dont le collecteur est connecté à la base du transistor T1, et dont l'émetteur est relié au noeud 4.

Le détecteur de courant 12 (qui détecte ici le courant dans la diode D et non dans la totalité du circuit oscillant comme en figure 3) est constitué d'un transistor bipolaire T3 de type NPN dont le collecteur est relié à la base du transistor T1 et dont l'émetteur est connecté au noeud 4, la base du transistor T3 étant reliée à la cathode de la diode D qui n'est plus connectée directement au noeud 4. Le transistor T3 fonctionne en commutation (bloqué-saturé) et peut donc être considéré, quand il conduit, comme une diode (jonction base-émetteur) en série avec la diode D entre les bornes 2 et 4 pour la fonction de roue libre. Par ailleurs, en conduisant, il bloque le transistor T1 en détournant son courant de base.

La fonction OU (11, figure 3) est réalisée par l'interconnexion directe des collecteurs des transistors T2 et T3 à la base du transistor T1.

L'élément retardateur empêchant la conduction du thyristor Th lorsque le transistor T1 est passant est ici constitué d'une source de courant 15 en série avec un condensateur Cr connecté entre les bornes 4 et 2. Le point milieu de cette association en série est relié à la gâchette du thyristor Th. Dès la fin de la résonance de l'étage inférieur, c'est-à-dire dès que le transistor T1 est rendu conducteur (instant t5), le condensateur Cr est chargé à courant constant par la source 15. Cela génère le retard souhaité pour l'amorçage du thyristor Th. De plus, le condensateur Cr empêche un amorçage intempestif du thyristor sous l'effet de la remontée de tension à la fin de la résonance. En effet, lorsqu'un courant circule dans la diode D (entre les instants t2 et t3, figure 2), le condensateur Cr est chargé négativement. Ainsi, lorsque la tension réapparaît aux bornes du thyristor Th, sa gâchette est polarisée négativement, ce qui empêche son amorçage.

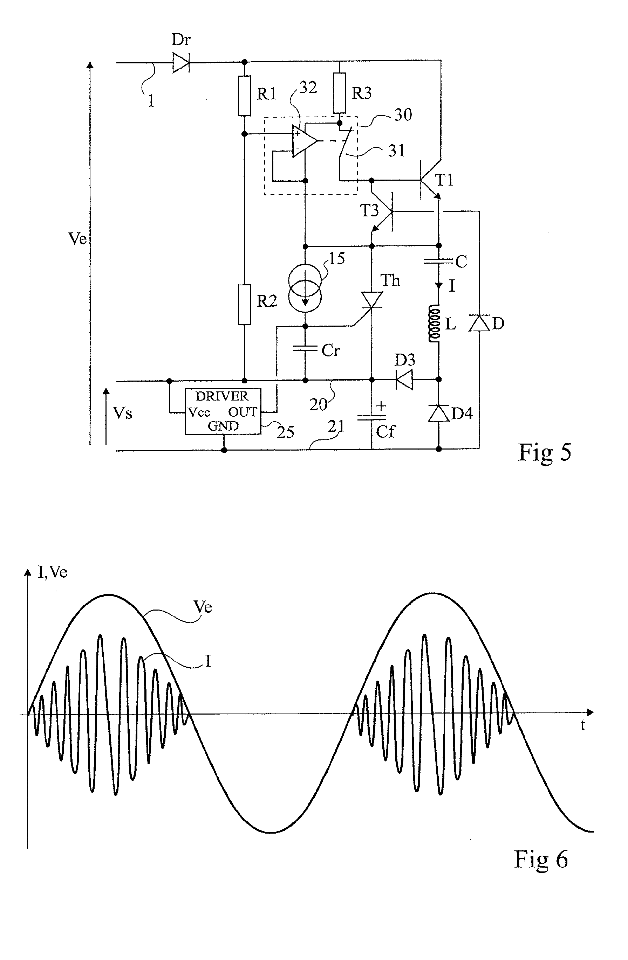

La figure 5 représente un mode de réalisation d'un circuit d'alimentation basé sur un oscillateur haute tension tel que décrit précédemment. Il s'agit d'une alimentation fournissant une tension de sortie continue Vs à partir d'une tension d'entrée alternative ou continue Ve. Une diode Dr de redressement monoalternance est prévue en entrée du circuit. La tension Vs est prélevée aux bornes 20, 21 d'un condensateur basse tension de filtrage Cf dont l'électrode positive est reliée à la cathode du triac Th de l'oscillateur de l'invention. Dans l'application à un circuit d'alimentation, la charge de l'oscillateur, c'est-à-dire le condensateur Cf est intercalé, associé à deux diodes D3 et D4. La diode D3 relie la cathode de thyristor Th à l'électrode de l'inductance L opposée au condensateur C, l'anode de la diode D3 étant reliée à l'inductance L. La diode D4 relie l'anode de la diode D3 (donc l'inductance L) à l'anode de la diode D, l'anode de la diode D4 et l'anode de la diode D étant reliées ensemble à la masse 21.

Grâce aux connexions des diodes D3 et D4, le condensateur Cf est chargé pendant toutes les alternances de la résonance, c'est-à-dire pendant les périodes où le thyristor Th conduit, pendant les périodes où la diode conduit, ainsi que pendant les périodes de conduction du transistor T1. Entre les instants t0 et t2 de la figure 2 (c'est-à-dire, pendant la conduction du thyristor Th), le circuit de charge du condensateur Cf comprend la diode D4, l'inductance L, le condensateur C et le thyristor Th. Entre les instants t2 et t4 (c'est-à-dire, pendant les périodes de conduction de la diode D), le circuit de charge du condensateur Cf comprend la diode D, le transistor T3, le condensateur C, l'inductance L et la diode D3.

Dans une application à un circuit d'alimentation, un circuit de commande 25 (driver) est prévu pour retarder chaque période de l'oscillateur en fonction de la tension de sortie. En d'autres termes, le rôle du circuit de commande 25 est d'ajouter un retard supplémentaire entre les instants t6 et t0 en fonction d'une mesure de la tension de sortie Vs, afin d'asservir cette tension sur une consigne prédéterminée. Sans circuit de commande, la tension Vs augmenterait de façon incontrôlée si l'énergie n'était pas consommée par une charge connectée aux bornes du condensateur Cf.

Le circuit de commande 25 peut être réalisé à partir de composants classiques, par exemple au moyen d'amplificateurs opérationnels. Sa réalisation est à la portée de l'homme du métier à partir des indications fonctionnelles données ci-dessus. La borne de sortie OUT du circuit 25 est reliée à la gâchette du thyristor Th pour contrôler le retard de son amorçage. Le circuit 25 a ses bornes d'alimentation (VCC et GND) connectées aux bornes 20 et 21 du condensateur Cf.

Dans le mode de réalisation de la figure 5, un amplificateur de courant optionnel 30 a été illustré en série avec la résistance R3. Cet amplificateur de courant (buffer) est fonctionnellement constitué d'un interrupteur 31 connecté entre la résistance R3 et la base du transistor T1. L'interrupteur 31 est commandé par un comparateur 32 dont l'entrée non-inverseuse (+) est reliée au point milieu entre les résistances R1 et R2 et dont l'entrée inverseuse (-) est reliée à l'émetteur du transistor T3. Le comparateur 32 est alimenté entre la résistance R3 et l'émetteur du transistor T3. L'amplificateur de courant 30 illustré par la figure 5 remplace le transistor T2 de la figure 4. En pratique, il pourra s'agir d'un montage Darlington réalisé à partir de transistors bipolaires.

Le circuit d'alimentation de la figure 5 peut fournir une tension de sortie Vs positive ou négative. Cela dépend uniquement de la borne utilisée entre les bornes 20 et 21 pour connecter la référence de la tension d'alimentation Ve. En prenant pour exemple une tension Ve alternative et une connexion de la phase du secteur à la borne 1, le neutre de l'alimentation alternative pourra être connecté à la borne 20 ou à la borne 21 selon le signe souhaité pour la tension Vs. Si le neutre est connecté à la borne 20, l'électrode négative 21 du condensateur Cf présentera un potentiel plus négatif, la tension Vs sera ainsi négative. Si le neutre de l'alimentation alternative est connecté à la borne 21 comme cela est représenté en figure 5, la tension Vs sera positive.

Le même raisonnement s'applique pour une tension Ve continue, selon la borne 20 ou 21 prise pour référence de cette tension continue.

Le circuit de la figure 5 a été décrit en relation avec une charge en tension du condensateur Cf. On notera toutefois que ce circuit d'alimentation s'applique également à une charge en courant (par exemple, pour constituer un circuit de commande d'une plaque chauffante à induction). Ce résultat est permis dans la mesure où le courant de charge est sinusoïdal. Le circuit de commande 25 contrôle alors le nombre d'impulsions de courant d'excitation de la plaque inductive.

Un circuit d'alimentation mettant en oeuvre un oscillateur haute tension selon l'invention présente de nombreux avantages.

Un premier avantage est la possibilité de fonctionner à partir d'une alimentation alternative ou continue sans engendrer de modification de la structure du circuit d'alimentation.

Un autre avantage est de permettre une alimentation positive ou négative sans modifier la structure du circuit d'alimentation, mais en changeant simplement la borne de connexion du potentiel de référence de la tension d'entrée. Cet avantage est particulièrement sensible, par exemple, lorsque l'on souhaite commander des triacs par des courants négatifs.

Un autre avantage du circuit d'alimentation de l'invention est qu'il fournit une alimentation continue non isolée, ce qui permet de commander notamment des triacs.

Un autre avantage de la présente invention est que le circuit d'alimentation démarre dès qu'il est sous tension.

En effet, l'oscillateur de l'invention n'a pas besoin d'une commande particulière pour commencer à fonctionner. Ceci est lié au fait que les commutateurs utilisés sont des commutateurs normalement fermés, ce qui constitue une caractéristique essentielle de l'invention. Bien que le circuit 25 ne soit pas alimenté lors de la mise sous tension du circuit d'alimentation, cela n'empêche pas l'oscillateur haute tension de commencer à fonctionner.

Un autre avantage est que le circuit permet, quand ils sont nécessaires, le recours à des filtres secteurs de tailles inférieures, grâce à la résonance en courant.

On notera que, dans le cas d'une alimentation par une tension alternative, la fréquence de l'oscillateur haute tension de l'invention est nettement supérieure à la fréquence de l'alimentation alternative. En d'autres termes, l'oscillateur de l'invention hache ou découpe le courant par rapport à l'alimentation alternative. La fréquence de résonance du circuit est fixée par les dimensionnements respectifs du condensateur C et de l'inductance L, ainsi que par les retards prévus pour l'amorçage du thyristor Th (instant t6 à t0 de la figure 2). En pratique, dans les modes de réalisation donnés par les figures 4 et 5, on ne prévoit pas de retard à l'amorçage du commutateur K1, c'est-à-dire entre les instants t4 et t5 des figures 2.

La figure 6 illustre le fonctionnement du circuit d'alimentation de la figure 5 sous une tension d'entrée Ve alternative. La figure 6 représente l'allure du courant I dans l'inductance L et l'allure de la tension alternative Ve. Comme il ressort de la figure 6, l'oscillateur de l'invention ne fonctionne que pendant les alternances positives de la tension Ve, c'est-à-dire qu'il provoque la charge du condensateur Cf que pendant ces alternances positives. A l'intérieur de celles-ci, on peut considérer que l'oscillateur de l'invention effectue un découpage de la tension d'alimentation alternative pour charger le condensateur Cf. On notera toutefois que la figure 6 a été tracée sans respect d'échelle notamment pour ce qui concerne la fréquence des oscillations du courant I qui est en pratique nettement supérieure à la fréquence de la tension Ve. Chaque période d'oscillation du courant I correspond à la période (t6-t5) illustrée par la figure 2. Par exemple, pour une alimentation de quelques dizaines de hertz (50 ou 60 hertz), on peut prévoir une fréquence de résonance de plusieurs dizaines de kilo-hertz (par exemple, 80 kHz) conduisant à une fréquence de découpage de l'ordre de 35 à 40 kHz.

Dans le cas d'une alimentation Ve continue, le découpage de cette tension est permanent.

Bien entendu, la présente invention est susceptible de diverses variantes et modifications qui apparaîtront à l'homme de l'art. En particulier, bien que l'invention ait été décrite plus particulièrement en relation avec une application à une alimentation en tension ou en courant d'une charge, celle-ci s'applique plus généralement à tous les circuits ayant besoin d'un oscillateur haute tension.

De plus, le dimensionnement des différents composants de l'oscillateur et du circuit d'alimentation est à la portée de l'homme du métier à partir des indications fonctionnelles données ci-dessus.

En outre, d'autres composants constituant des interrupteurs normalement fermés pourront être utilisés à la place du transistor T1 et du thyristor Th. Toutefois, le recours à un thyristor ouvrable par la gâchette (GTO) et normalement fermé constitue un mode de réalisation préféré pour son faible coût par rapport à un transistor MOS haute tension ou à un transistor de type IGBT. Un exemple de thyristor GTO normalement fermé est décrit dans le brevet américain 6 323 718 (B3706).

Enfin, d'autres circuits de commande que celui illustré par la figure 4 pourront être mis en oeuvre pourvu de respecter les fonctionnalités décrites en relation avec les figures 1 et 3.

## Revendications

1. Oscillateur haute tension comprenant :
un premier commutateur (K1 ; T1, R3) normalement fermé en série avec un circuit résonnant (C, L) ;
un deuxième commutateur (K2 ; Th) normalement fermé en parallèle sur le circuit résonant ; et
un circuit de commande (3) interdisant, dès la mise sous tension de l'oscillateur, la conduction simultanée des deux commutateurs.

2. Oscillateur selon la revendication 1 comportant un unique circuit résonnant (C, L).

3. Oscillateur selon la revendication 1 ou 2, dans lequel le circuit de commande (3) est dépourvu de circuit d'alimentation auxiliaire.

4. Oscillateur selon l'une quelconque des revendications 1 à 3, dans lequel ledit premier commutateur (K1 ; T1, R3) est fermé pendant des périodes de recharge d'un condensateur (C) du circuit résonnant série, et est ouvert pendant une phase de résonance.

5. Oscillateur selon l'une quelconque des revendications 1 à 4, dans lequel la commande du premier commutateur (K1 ; T1, R3) est effectuée en comparant la tension aux bornes du circuit résonnant (L, C) par rapport à un seuil prédéterminé.

6. Oscillateur selon l'une quelconque des revendications 1 à 5, dans lequel la commande du deuxième commutateur (K2 ; Th) est effectuée en retardant l'instant de fermeture de ce commutateur par rapport à la fin de conduction du premier commutateur (K1 ; T1, R3).

7. Oscillateur selon l'une quelconque des revendications 1 à 6, dans lequel lesdits commutateurs sont bidirectionnels en courant et en tension.

8. Oscillateur selon l'une quelconque des revendications 1 à 6, dans lequel lesdits commutateurs sont unidirectionnels.

9. Oscillateur selon la revendication 8, comportant une diode (D) de roue libre polarisée de façon inverse par rapport au deuxième commutateur (K2 ; Th).

10. Oscillateur selon les revendications 8 et 9, dans lequel la phase de résonance comporte un premier cycle de décharge dudit condensateur (C) à travers le deuxième commutateur (K2 ; Th) et un deuxième cycle de décharge dudit condensateur à travers ladite diode de roue libre (D).

11. Oscillateur selon l'une quelconque des revendications 8 à 10, dans lequel le deuxième commutateur est constitué d'un thyristor (Th) dont l'anode est connectée côté premier commutateur (T1, R3).

12. Oscillateur selon l'une quelconque des revendications 8 à 11, dans lequel le premier commutateur est constitué d'un transistor bipolaire (T1) de type NPN rendu normalement fermé par la connexion de sa base et de son collecteur au moyen d'une résistance (R3), l'émetteur du transistor bipolaire étant relié au circuit résonant (L, C).

13. Circuit d'alimentation continu comportant un oscillateur haute tension selon l'une quelconque des revendications 1 à 12.

14. Circuit d'alimentation selon la revendication 13, dans lequel un condensateur de sortie (Cf) est connecté, en parallèle avec deux diodes de redressement (D3, D4) en série, au deuxième commutateur (Th).

15. Circuit d'alimentation selon la revendication 14, dans lequel une première diode de redressement (D3) relie une extrémité du circuit résonant (L, C) à une électrode du deuxième commutateur (Th) et à une électrode positive du condensateur de sortie (Cf), l'anode de la première diode de redressement étant reliée au circuit résonant et à la cathode d'une deuxième diode de redressement (D4) reliée à la diode de roue libre (D).

16. Circuit d'alimentation selon la revendication 14 ou 15, dans lequel la polarité de la tension de sortie est choisie en fonction de l'électrode du condensateur de sortie (Cf) à laquelle est connectée la référence de la tension d'alimentation.

17. Circuit d'alimentation selon l'une quelconque des revendications 13 à 16, comportant un circuit de commande (25) ayant pour rôle de retarder l'instant d'amorçage du deuxième commutateur (Th) en fonction de la tension de sortie.
